# FASCICULE DE BREVET EUROPEEN

(11) **EP 3 047 721 B1**
(45) Date de publication et mention de la délivrance du brevet: **29.12.2021**
(21) Numéro de dépôt: 16151680.2
(22) Date de dépôt: 18.01.2016
(51) Int. Cl.: A01G 3/025

(54) **LAME D'OUTIL DE COUPE A TROIS BISEAUX ET OUTIL DE COUPE COMPRENANT CETTE LAME**
KLINGE EINES SCHNEIDEWERKZEUGS MIT DREI ABSCHRÄGUNGEN, UND EINE SOLCHE KLINGE UMFASSENDES SCHNEIDEWERKZEUG
BLADE OF A CUTTING TOOL WITH THREE BEVELS AND CUTTING TOOL INCLUDING SAID BLADE

(30) Priorité: 22.01.2015 FR 1550499
(43) Date de publication de la demande: 27.07.2016
(73) Titulaire: SECATEURS PRADINES, 49150 Baugé-en-Anjou (FR)
(72) Inventeur: DEVILLE, Antoine, 49150 Baugé en Anjou (FR)
(74) Mandataire: Novagraaf Technologies

(56) Documents cités:
- EP-A1- 1 334 653
- FR-A1- 2 822 635

## Description

La présente invention concerne le domaine des outils de coupe à mâchoire coupante, tels que des élagueurs ou des sécateurs.

Plus particulièrement, la présente invention concerne une lame d'un outil de coupe à mâchoire coupante, telle qu'une lame d'élagueur ou de sécateur, destinée à être articulée avec un organe complémentaire de manière à former la mâchoire coupante de l'outil de coupe, cette lame présentant sur chaque face, trois biseaux agencés successivement en direction du fil de la lame et du biseau présentant la pente la moins accentuée au biseau présentant la pente la plus accentuée.

De manière classique, les outils de coupe à mâchoire coupante permettent de placer l'objet à couper, par exemple une branche, entre les deux parties articulées de cette mâchoire coupante. Ces deux parties articulées sont formées d'une lame et d'un organe complémentaire. Classiquement les lames présentent un fil, encore appelé arête de coupe, permettant de couper le matériau.

Sur les sécateurs ou les élagueurs, il est classique d'avoir une lame présentant au moins un biseau se terminant par l'arête de coupe, ainsi qu'un deuxième biseau adjacent à ce premier biseau et agencé entre le premier biseau et le faux-tranchant de la lame. Le document EP1334653A1 divulgue un sécateur de ce type. Dans cette demande, on désigne par faux-tranchant la partie de la lame à l'opposé de l'arête de coupe. Cette agencement permet de diminuer les efforts sur la lame lors de la coupe, et notamment les risques de coincement de la lame dans le matériau à couper.

Cependant, ce type de lame est perfectible. En effet, il s'avère que lorsque le matériau à couper a une certaine taille, par exemple pour dans le cas d'une branche, l'effort sur la lame est grand, ce qui implique un effort élevé pour agir sur l'articulation et resserrer la mâchoire coupante de manière à couper le matériau. Cela est encore plus gênant dans le cas d'un sécateur, et encore plus dans le cas d'un élagueur.

Le problème technique que vise à résoudre l'invention est donc comment améliorer un outil de coupe à mâchoire coupante pour faciliter la coupe avec celui-ci .

A cet effet, un premier objet de l'invention est une lame d'outil de coupe à mâchoire coupante, telle qu'une lame d'élagueur ou de sécateur, destinée à être articulée avec un organe complémentaire de manière à former la mâchoire coupante de l'outil de coupe, ladite lame comprenant :
- un moyen d'articulation destiné à s'articuler avec l'organe complémentaire,
- une partie tranchante comprenant deux faces séparées l'une de l'autre par une tranche, cette tranche comprenant une arête de coupe destinée à couper un matériau et une portion à l'opposé de cette arête de coupe sur la partie tranchante, cette portion étant appelée faux-tranchant, chaque face comprenant trois biseaux de pentes différentes, lesdits biseaux étant agencés successivement en partant depuis l'arête de coupe vers ledit faux-tranchant.

Cette lame en venant en contact avec le matériau à couper, et en l'enserrant avec l'organe complémentaire, va permettre la coupe de ce matériau tout en subissant moins d'efforts contre le matériau au fur et à mesure de sa pénétration dans celui-ci. Ainsi grâce à cette lame, l'outil de coupe à mâchoire coupante permettra de couper le matériau plus aisément. Par exemple, dans le cas d'un élagueur, l'utilisateur aura moins d'effort à fournir sur les manches de l'élagueur pour resserrer la mâchoire coupante et sectionner les branches.

La lame selon l'invention peut optionnellement présenter une ou plusieurs des caractéristiques suivantes :
- les biseaux de chaque face de la partie tranchante sont successivement en partant depuis l'arête de coupe vers ledit faux-tranchant :
   ∘ un premier biseau délimité d'un côté par l'arête de coupe,
   ∘ un deuxième biseau adjacent à ce premier biseau,
   ∘ un troisième biseau adjacent à ce deuxième biseau ; dans ce cas les premiers biseaux des deux faces de la partie tranchante forment entre eux un premier angle, qui est un angle aigüe dont la pointe correspond à l'arête de coupe, chaque deuxième biseau est compris dans un plan, les plans dans lesquels sont compris les deuxièmes biseaux formant entre eux un deuxième angle inférieur audit premier angle, chaque troisième biseau est compris dans un plan, les plans dans lesquels sont compris les troisièmes biseaux formant entre eux un troisième angle inférieur audit deuxième angle ;
- le premier angle est compris entre 29 et 31 degrés; cet angle permet d'améliorer la coupe ;
- le deuxième angle est compris entre 14 et 16 degrés; cet angle permet d'améliorer la coupe ;
- le troisième angle est compris entre 4,5 et 8,5 degrés, notamment entre 6,5 et 8,5 degrés; cet angle permet d'améliorer la coupe ;
- le premier angle est compris entre 29 et 31 degrés, le deuxième angle est compris entre 14 et 16 degrés, et le troisième angle est compris entre 4,5 et 8,5 degrés, notamment entre 6,5 et 8,5 degrés; cette combinaison particulière présente une coupe améliorée, notamment dans le cadre d'un élagueur, notamment un élagueur à enclume;
- le premier biseau de l'une des faces ou de chaque face présente une largeur comprise entre 1,4 et 2,0 millimètres; cela permet de diminuer les efforts sur la lame ;
- le deuxième biseau de l'une des faces ou de chaque face présente une largeur comprise entre 2,2 et 2,8 millimètres; cela permet de diminuer les efforts sur la lame ;
- le troisième biseau de l'une des faces ou de chaque face présente une largeur au moins trois fois supérieure à celle du deuxième biseau de la face correspondante; cela permet de diminuer les efforts sur la lame ;
- le premier biseau de l'une des faces présente une largeur comprise entre 1,4 et 2,0 millimètres, le deuxième biseau de cette même face présente une largeur comprise entre 2,2 et 2,8 millimètres, et le troisième biseau de cette même face présente une largeur au moins trois fois supérieure à celle du deuxième biseau de la face correspondante; cette combinaison améliore la coupe, notamment dans le cas d'un élagueur à enclume;
- le premier biseau de chaque face présente une largeur comprise entre 1,4 et 2,0 millimètres, le deuxième biseau de chaque face présente une largeur comprise entre 2,2 et 2,8 millimètres, et le troisième biseau de chaque face présente une largeur au moins trois fois supérieure à celle du deuxième biseau de la face correspondante; cette combinaison est particulièrement avantageuse dans le cadre d'un élagueur, notamment un élagueur à enclume;
- les deux faces de la partie tranchante sont symétriques;
- la lame comprend une face plane de glissement adjacente à la partie tranchante et le moyen d'articulation est un trou traversant la lame, dont l'un des orifices débouche sur cette face plane de glissement; cela permet de réaliser simplement une articulation avec un organe complémentaire, notamment au moyen d'une tige passant au travers de ce trou et reliée à l'organe complémentaire, ce dernier présentant également une face plane pour glisser contre la face plane de glissement de la lame;
- les biseaux sont inclinés par rapport à ladite face plane de glissement; on augmente ainsi progressivement la pente par rapport à cette face plane de glissement ;
- la lame comprend une protubérance d'actionnement de ladite partie tranchante par déplacement de la protubérance d'actionnement par rapport audit moyen d'articulation; cette protubérance d'actionnement va ainsi former un levier permettant de transférer l'effort de l'utilisateur à la lame par déplacement par rapport, notamment autour, du moyen d'articulation ;
- la protubérance d'actionnement présente un moyen de fixation destiné à être fixé à un manche ; cela permet d'augmenter le bras de levier.

Un autre objet de l'invention est un outil de coupe comprenant une lame selon l'invention et un organe complémentaire articulé audit moyen d'articulation de la lame, de manière à ce que la lame et l'organe complémentaire forment une mâchoire coupante de l'outil de coupe. Cet outil de coupe va bénéficier des avantages de la lame selon l'invention. En particulier, il pourra être actionné avec moins d'effort.

L'outil de coupe selon l'invention peut optionnellement présenter une ou plusieurs des caractéristiques suivantes :
- ledit organe complémentaire comprend une face de maintien, contre laquelle l'arête de coupe est apte à venir en contact selon une position fermée de la mâchoire coupante ; cela permet un meilleur maintien du matériau, notamment une branche ; la face de maintien peut par exemple être plane et/ou former une enclume ;
- l'outil de coupe est un élagueur, notamment un élagueur à enclume.

D'autres caractéristiques et avantages de l'invention apparaîtront à la lecture de la description détaillée des exemples non limitatifs qui suivent, pour la compréhension de laquelle on se reportera aux dessins annexés, parmi lesquels:
- la figure 1 est une vue de côté d'un outil de coupe selon l'invention, avec une lame selon l'invention ;
- la figure 2 est une vue de côté de la lame selon l'invention ;
- la figure 3 est une section de la figure 2 selon BB'.

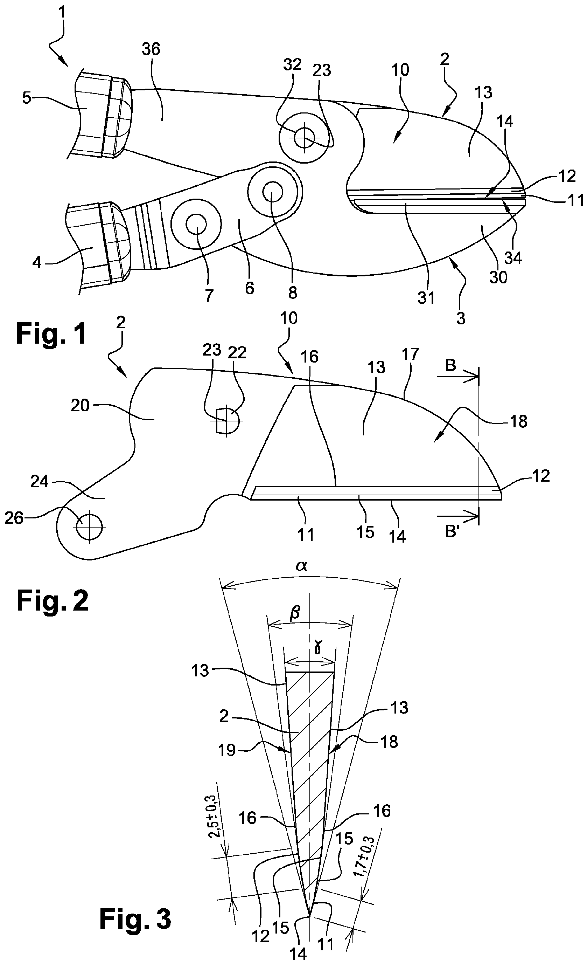

La figure 1 illustre un outil de coupe 1 à mâchoire coupante selon l'invention.

D'une manière générale l'outil de coupe 1 comprend deux organes 2 et 3 formant une mâchoire entre lesquels le matériau à couper sera enserré pour être coupé.

En particulier, ces organes sont une lame 2 et un organe complémentaire 3 articulés entre eux, de manière à former la mâchoire coupante. Ces organes peuvent être écartés ou rapprochés l'un de l'autre, la coupe se faisant lors de leur rapprochement.

Dans cet exemple, il s'agit d'un élagueur à enclume 1, utilisé notamment pour sectionner des branches, par exemple lors de la taille d'un arbre.

La lame 2 et l'organe complémentaire 3 sont montés de manière pivotante autour d'un axe de pivotement 23 commun, transversal par rapport à ces organes 2, 3. La lame 2 présente une arête de coupe 14, destinée à couper les branches.

L'organe complémentaire 3 comprend une partie de maintien 30, qui porte une enclume 31, présentant une face de maintien 34 plane s'étendant transversalement par rapport à la lame 2, notamment perpendiculairement à celle-ci. Le pivotement de lame 2 et de l'organe complémentaire 3 va permettre de rapprocher l'arête de coupe 14 de la face de maintien 34.

Sur cette figure 1, le rapprochement s'est effectué jusqu'à ce que l'arête de coupe 14 soit en contact avec la face de maintien 34. La mâchoire coupante est ainsi en position fermée.

Pour améliorer la puissance de la coupe, la lame 2 et l'organe complémentaire 3 sont reliés à des manches, respectivement 4 et 5. L'utilisateur peut ainsi exercer la force de coupe avec les deux mains.

De plus, pour renforcer la puissance de coupe, la partie tranchante 10 de la lame 2, qui porte l'arête de coupe 14, et la partie de la lame reliée au manche actionnant cette lame 4, sont réparties de part et d'autre de l'axe de pivotement 23. De même, la partie de maintien 30 et une partie 36 de l'organe complémentaire 3 reliée au manche 4 sont réparties de part et d'autre de l'axe de pivotement 23. Cela permet de bénéficier de deux bras de levier à la fois sur la partie tranchante 10 et sur l'enclume 31.

En écartant les manches 4 et 5, la mâchoire s'ouvre et la branche peut être placée entre l'enclume 31 et l'arête de coupe 14. Le rapprochement des manches 4 et 5 permet de sectionner la branche en maintenant celle-ci contre l'enclume 31 pendant la coupe.

La force exercée à deux mains peut s'avérer insuffisante, notamment si la lame se coince dans le bois, ce qui peut arriver lorsque la branche est assez grosse, par exemple d'un diamètre supérieur au tiers de la partie tranchante.

Aussi, la lame 2 selon l'invention présente trois biseaux 11, 12, 13 afin de diminuer l'effort de coupe.

La lame est illustrée plus en détails en figure 2 et 3. La partie tranchante 10 de la lame 2 deux faces 18 et 19. Seule la face 18 est visible en figure 1 et 2. Ces deux faces 18 et 19 de la partie tranchante sont délimitées et séparées par une tranche périphérique comprenant l'arête de coupe 14 et un faux-tranchant 17. Sur cette partie tranchante 10, le faux-tranchant 17 est à l'opposé de l'arête de coupe 14.

Les trois biseaux 11, 12, 13 sont agencés successivement en partant depuis l'arête de coupe 14 vers ledit faux-tranchant 17. Selon une réalisation de l'invention, par exemple comme illustré ici, ces trois biseaux sont agencés successivement selon une direction perpendiculaire à l'arête de coupe 14.

Dans l'exemple illustré, la lame 2 présente trois biseaux 11, 12, 13 sur chacune des faces 18 et 19.

Le premier biseau 11 présente l'angle α le plus grand. Cet angle, dit premier angle α ci-après, est formé par les premiers biseaux 11 de chaque face 18 et 19, sa pointe correspond à l'arête de coupe 14 où se joignent les deux premiers biseaux 11. C'est lui qui va écarter les parties du bois après que l'arête de coupe 14 les ait séparées.

Pour éviter que l'effort de coupe soit trop grand ou que la lame se coince, la partie tranchante 10 comprend un deuxième biseau 12 adjacent et jointif au premier biseau 11 au niveau d'une arête 15, marquant un changement de pente entre le premier biseau 11 et le deuxième biseau 12, la pente du deuxième biseau étant plus faible que celle du premier biseau.

En d'autres termes, les plans dans lesquels sont compris les deuxièmes biseaux 12 de chaque face 18, 19, forment entre eux un deuxième angle β inférieur audit premier angle α, comme on peut le voir en figure 3.

Pour améliorer davantage la coupe, la partie tranchante 10 comprend un troisième biseau 13 adjacent et jointif au deuxième biseau 12 au niveau d'une arête 16, marquant un changement de pente entre le deuxième biseau 12 et le troisième biseau 13, la pente du troisième biseau étant plus faible que celle du deuxième biseau. En d'autres termes, les plans dans lesquels sont compris les troisièmes biseaux 13 de chaque face 18, 19, forment entre eux un troisième angle γ inférieur audit deuxième angle β, comme on peut le voir en figure 3.

L'exemple d'élagueur 1 illustré applique une combinaison de ces angles pour lesquels la coupe est particulièrement améliorée, à savoir :
- le premier angle α est compris entre 29 et 31 degrés,
- le deuxième angle β est compris entre 14 et 16 degrés, et
- le troisième angle γ est compris entre 6,5 et 8,5 degrés.

Egalement pour améliorer la coupe, la largeur de biseau est croissante d'un biseau à l'autre en allant de l'arête de coupe 14 au faux-tranchant 17. Dans cet exemple, la largeur est prise selon une direction environ perpendiculaire à l'arête de coupe 14.

L'exemple d'élagueur 1 illustré applique une combinaison de largeurs pour laquelle la coupe est particulièrement améliorée, à savoir :
- le premier biseau 11 de chaque face présente une largeur comprise entre 1,4 et 2,0 millimètres,
- le deuxième biseau 12 de chaque face présente une largeur comprise entre 2,2 et 2,8 millimètres, et
- le troisième biseau 13 de chaque face présente une largeur au moins trois fois supérieure à celle du deuxième biseau 12 de la face correspondante.

Même si dans cet exemple la combinaison d'angles et la combinaison de largeurs visées ci-dessus sont appliquées ensembles, selon d'autres modes de réalisation non illustrés on pourrait appliquer l'une ou l'autre de ces combinaisons.

Dans cet exemple, mais de manière non limitative, le premier biseau et le deuxième biseau ont une largeur constante et sont délimités par des arêtes parallèles, à savoir l'arête de coupe 14 et l'arête 15 pour le premier biseau 11, et l'arête 15 et l'arête 16 pour le deuxième biseau 12.

Selon une réalisation de l'invention et tel qu'illustré dans cet exemple, la partie tranchante 10 est symétrique par rapport à un plan passant par l'arête de coupe 14 et par le milieu de l'épaisseur de la partie tranchante 10. Ce plan est représenté en pointillés en figure 3.

Comme illustré en figure 2, la lame 2 comprend une face plane de glissement 20 adjacente à la partie tranchante 10. L'organe complémentaire 3 présente également une face de glissement (non représentée) qui vient contre celle de la lame. Lors du pivotement de la lame 2 et de l'organe complémentaire 3, ces deux faces glissent l'une contre l'autre. Dans cet exemple, elles sont traversées chacune par un trou 22. Seul le trou 22 de la face de glissement de la lame 2 est illustré en figure 2. Une tige 32 traverse les deux trous pour réaliser l'articulation de la mâchoire coupante. Des moyens fixés à la vis, notamment des écrous, permettent de maintenir les deux faces de glissement l'une contre l'autre.

Il en résulte que lesdits biseaux 11, 12, 13 sont inclinés par rapport à la face plane de glissement 20 de la lame 2. Les faces de la lame 2 au niveau de la face de glissement peuvent être parallèles.

La lame 2 comprend une protubérance d'actionnement 24. Dans cet exemple, cette dernière est indirectement fixée au manche 4 qui l'actionne par une pièce intermédiaire 6.

L'une des extrémités de la pièce intermédiaire 6 est montée pivotante au niveau d'un axe 8 distinct de l'axe de pivotement transversal 23. L'autre extrémité est emmanchée dans le manche 4. Entre ses deux extrémités, la pièce intermédiaire est fixée à la protubérance d'actionnement 24 de la lame 2, par un moyen de serrage 7, tel qu'une vis, traversant un trou traversant 26, situé à l'extrémité de cette protubérance d'actionnement 24.

## Revendications

1. Lame (2) d'outil de coupe à mâchoire coupante, telle qu'une lame d'élagueur ou de sécateur, destinée à être articulée avec un organe complémentaire (3) de manière à former la mâchoire coupante de l'outil de coupe (1), ladite lame comprenant :
- un moyen d'articulation (22) destiné à s'articuler avec l'organe complémentaire,
- une partie tranchante (10) comprenant deux faces (18, 19) séparées l'une de l'autre par une tranche, cette tranche comprenant une arête de coupe (14) destinée à couper un matériau et une portion à l'opposé de cette arête de coupe sur la partie tranchante, cette portion étant appelée faux-tranchant (17), **caractérisé en ce que** chaque face comprend trois biseaux (11, 12, 13) de pentes différentes, lesdits biseaux étant agencés successivement en partant depuis l'arête de coupe vers ledit faux-tranchant.

2. Lame (2) selon la revendication 1, dans laquelle les biseaux de chaque face (18, 19) de la partie tranchante sont successivement en partant depuis l'arête de coupe (14) vers ledit faux-tranchant (17):
- un premier biseau (11) délimité d'un côté par l'arête de coupe,
- un deuxième biseau (12) adjacent à ce premier biseau,
- un troisième biseau (13) adjacent à ce deuxième biseau,
et dans laquelle les premiers biseaux des deux faces de la partie tranchante forment entre eux un premier angle (α), qui est un angle aigüe dont la pointe correspond à l'arête de coupe, chaque deuxième biseau est compris dans un plan, les plans dans lesquels sont compris les deuxièmes biseaux formant entre eux un deuxième angle (β) inférieur audit premier angle, chaque troisième biseau est compris dans un plan, les plans dans lesquels sont compris les troisièmes biseaux formant entre eux un troisième angle (γ)inférieur audit deuxième angle.

3. Lame (2) selon la revendication 2, dans laquelle le premier angle (α) est compris entre 29 et 31 degrés.

4. Lame (2) selon la revendication 2 ou 3, dans laquelle le deuxième angle (β) est compris entre 14 et 16 degrés.

5. Lame (2) selon l'une quelconque des revendications 2 à 4, dans laquelle le troisième angle (γ)est compris entre 4,5 et 8,5 degrés.

6. Lame (2) selon l'une quelconque des revendications précédentes, dans laquelle la lame comprend une face plane de glissement (20) adjacente à la partie tranchante (10) et le moyen d'articulation est un trou (22) traversant la lame, dont l'un des orifices débouche sur cette face plane de glissement.

7. Lame (2) selon la revendication 6, dans laquelle lesdits biseaux (11, 12, 13) sont inclinés par rapport à ladite face plane de glissement.

8. Lame (2) selon l'une quelconque des revendications précédente, comprenant une protubérance d'actionnement (24) de ladite partie tranchante (10) par déplacement de la protubérance d'actionnement par rapport audit moyen d'articulation (22).

9. Outil de coupe (1) comprenant une lame (2) selon l'une des revendications précédentes et un organe complémentaire (3) articulé au moyen d'articulation (22) de la lame, de manière à ce que la lame et l'organe complémentaire forment une mâchoire coupante de l'outil de coupe.

10. Outil de coupe (1) selon la revendication 9, ledit organe complémentaire (3) comprenant une face de maintien (34) contre laquelle l'arête de coupe (14) est apte à venir en contact selon une position fermée de la mâchoire coupante.

11. Outil de coupe (1) selon la revendication 9 à 10, ledit outil de coupe étant un élagueur (1).

## Patentansprüche

1. Klinge (2) eines Schneidwerkzeugs mit Schneidbacke, wie z.B. einer Baum- oder Rebscherenklinge, die dazu bestimmt ist, mit einem komplementären Element (3) gelenkig verbunden zu werden, um die Schneidbacke des Schneidwerkzeugs (1) zu bilden, wobei die Klinge umfasst:
- ein Scharniermittel (22) zur Anbringung an dem komplementären Element,
ein Schneidteil (10), das zwei Flächen (18, 19) aufweist, die voneinander durch eine Kante getrennt sind, wobei diese Kante eine Schneidkante (14), die dazu bestimmt ist, ein Material zu schneiden, und einen Abschnitt gegenüber dieser Schneidkante auf dem Schneidteil aufweist, wobei dieser Abschnitt als falsche Kante (17) bezeichnet wird, **dadurch gekennzeichnet, dass** jede Fläche drei Schrägen (11, 12, 13) mit unterschiedlichen Neigungen aufweist, wobei die Schrägen ausgehend von der Schneidkante in Richtung der falschen Kante nacheinander angeordnet sind.

2. Klinge (2) nach Anspruch 1, wobei die Abschrägungen jeder Fläche (18, 19) des Schneidteils nacheinander von der Schneidkante (14) in Richtung der falschen Kante (17) beginnen:
- eine erste Fase (11), die auf einer Seite durch die Schneidkante begrenzt ist
- eine zweite Fase (12), die an diese erste Fase angrenzt
- eine dritte Abschrägung (13), die an diese zweite Abschrägung angrenzt,
und in denen die ersten Schrägen der beiden Flächen des Schneidteils zwischen sich einen ersten Winkel (α) bilden, der ein spitzer Winkel ist, dessen Punkt der Schneidkante entspricht, jede zweite Schräge in einer Ebene enthalten ist, wobei die Ebenen, in denen die zweiten Schrägen enthalten sind, zwischen sich einen zweiten Winkel (β) bilden, der kleiner als der erste Winkel ist, jede dritte Schräge in einer Ebene enthalten ist, wobei die Ebenen, in denen die dritten Schrägen enthalten sind, zwischen sich einen dritten Winkel bilden, der kleiner als der zweite Winkel ist.

3. Die Klinge (2) nach Anspruch 2, wobei der erste Winkel (α) zwischen 29 und 31 Grad liegt.

4. Die Klinge (2) nach Anspruch 2 oder 3, wobei der zweite Winkel (β) zwischen 14 und 16 Grad liegt.

5. Die Klinge (2) nach einem der Ansprüche 2 bis 4, wobei der dritte Winkel (zwischen 4,5 und 8,5 Grad beträgt.

6. Klinge (2) nach einem der vorhergehenden Ansprüche, **dadurch gekennzeichnet, dass** die Klinge eine flache Gleitfläche (20) in der Nähe des Schneidteils (10) aufweist und dass das Gelenkmittel ein Loch (22) ist, das durch die Klinge hindurchgeht und von dem eine der Öffnungen in diese flache Gleitfläche mündet.

7. Klinge (2) nach Anspruch 6, wobei die Schrägen (11, 12, 13) in Bezug auf die flache Gleitfläche geneigt sind.

8. Klinge (2) nach einem der vorhergehenden Ansprüche, mit einem Betätigungsvorsprung (24) des Schneidteils (10) durch Verschiebung des Betätigungsvorsprungs relativ zu den Gelenkmitteln (22).

9. Schneidwerkzeug (1) mit einer Klinge (2) nach einem der vorhergehenden Ansprüche und einem Komplementärteil (3), das an den Gelenkmitteln (22) der Klinge angelenkt ist, so daß die Klinge und das Komplementärteil eine Schneidbacke des Schneidwerkzeugs bilden.

10. Schneidwerkzeug (1) nach Anspruch 10, wobei das Komplementärteil (3) eine Haltefläche (34) aufweist, mit der die Schneide (14) je nach Schließstellung der Schneidbacke in Kontakt kommen kann.

11. Schneidwerkzeug (1) nach einem der Ansprüche 9 bis 10, wobei das Schneidwerkzeug eine Astschere (1) ist.

## Claims

1. A blade (2) of a cutting tool with a cutting jaw, such as a pruning or pruning shears blade, intended to be articulated with a complementary member (3) so as to form the cutting jaw of the cutting tool (1), said blade comprising:
- a hinge means (22) for hinging to the complementary member, a cutting part (10) comprising two faces (18, 19) separated from each other by an edge, this edge comprising a cutting edge (14) intended to cut a material and a portion opposite this cutting edge on the cutting part, this portion being called a false edge (17),**characterized in that** each face comprises three bevels (11, 12, 13) of different slopes, the said bevels being arranged in succession starting from the cutting edge towards the said false edge.

2. The blade (2) according to claim 1, wherein the bevels of each face (18, 19) of the cutting part are successively starting from the cutting edge (14) towards said false edge (17) :
- a first bevel (11) delimited on one side by the cutting edge
- a second bevel (12) adjacent to this first bevel
- a third bevel (13) adjacent to this second bevel,
and in which the first bevels of the two faces of the cutting part form between them a first angle (α), which is an acute angle whose point corresponds to the cutting edge, each second bevel is included in a plane, the planes in which the second bevels are included forming between them a second angle (β) smaller than the said first angle, each third bevel is included in a plane, the planes in which the third bevels are included forming between them a third angle (smaller than the said second angle.

3. The blade (2) of claim 2, wherein the first angle (α) is between 29 and 31 degrees.

4. The blade (2) according to claim 2 or 3, wherein the second angle (β) is between 14 and 16 degrees.

5. The blade (2) according to any of claims 2 to 4, wherein the third angle (is between 4.5 and 8.5 degrees.

6. The blade (2) according to any one of the preceding claims, wherein the blade comprises a flat sliding face (20) adjacent to the cutting portion (10) and the hinge means is a hole (22) passing through the blade, one of the orifices of which opens onto this flat sliding face.

7. The blade (2) according to claim 6, wherein said bevels (11, 12, 13) are inclined with respect to said flat sliding face.

8. The blade (2) according to any one of the preceding claims, comprising an actuation protrusion (24) of said cutting portion (10) by displacement of the actuation protrusion relative to said hinge means (22).

9. A cutting tool (1) comprising a blade (2) according to one of the preceding claims and a complementary member (3) articulated to the articulation means (22) of the blade, so that the blade and the complementary member form a cutting jaw of the cutting tool.

10. A cutting tool (1) according to claim 10, said complementary member (3) comprising a holding face (34) against which the cutting edge (14) is adapted to come into contact according to a closed position of the cutting jaw.

11. A cutting tool (1) according to claim 9 to 10, said cutting tool being a pruner (1).
